# EUROPEAN PATENT SPECIFICATION

(11) **EP 1 029 686 B1**
(45) Date of publication and mention of the grant of the patent: **29.09.2004**
(21) Application number: 00103054.3
(22) Date of filing: 15.02.2000
(51) Int. Cl.: B41J 2/21, B41J 2/505, G06K 15/10

(54) **Printing apparatus and method**
Druckvorrichtung und -verfahren
Dispositif et méthode d'impression

(30) Priority: 17.02.1999 EP 99301151
(43) Date of publication of application: 23.08.2000
(73) Proprietor: Hewlett-Packard Company, A Delaware Corporation, Palo Alto, CA 94304 (US)
(72) Inventor: Vinyals, Lluis, 08190 Sant Cugat del Valles, Barcelona (ES); Sanchez, Salvador, 08203 Sabadell, Barcelona (ES); White, Lawrence H., Corvallis OR 97330 (US)
(74) Representative: Orsi, Alessandro

(56) References cited:
- EP-A- 0 507 328
- EP-A- 0 517 543
- EP-A- 0 532 302
- EP-A- 0 645 246
- EP-A- 0 730 973
- EP-A- 0 761 453

## Description

The present invention relates to inkjet printers, including but not limited to large format printers, and to methods of operation thereof.

A problem with existing inkjet printheads, comprising a plurality of nozzles arranged substantially in a straight line, is that the nozzles at and adjacent the ends of the printhead or pen tend to eject inkdrops at an angle to a print medium rather than perpendicularly thereto as desired.

The Hewlett-Packard DesignJet 750 family of printers solved this problem by only using the central nozzles of the pen, thus avoiding the use of those with directionality problems. Since the extreme nozzles were not used at all, this produced clogging of these nozzles and deterioration of the reliability of the pen. In particular, since contaminants generally flow to the extreme nozzles actually being used, some of the central nozzles did not fire correctly. As the number of extreme nozzles with directionality problems increased, the portion of the pen actually being used had to become smaller and smaller to achieve satisfactory quality, which had an adverse effect on throughput.

European Patent Application no. EP 0 517 543, describes an inkjet recording method to control the unevenness of image density which is generated in the vicinity of a boundary between each recorded image area at each consecutive swath. This European Application is trying to address problems generated by form-feed advance accuracy and differences in drop volume (generating dot of different sizes) among extreme and central nozzles caused by manufacturing tolerances and heat distribution on nozzle plate. However it is not trying to solve problems generated by (i) swath height errors, i.e. nozzles firing at an angle which is different between central and extreme nozzles, or (ii) nozzle health, since the extreme nozzles are more sensitive to internal contamination, these are more likely to become clogged, misdirected or weak.

This helps to reduce the difference in optical density between a zone printed at 100% printing density in one pass and a zone printed at 100% printing density in two or more passes, irrespective of the distribution of the drops during the two or more passes. In particular dots made on the second pass are not printed in the position that would be desired for a maximum image quality, since this misalignment may produce wide lighter areas in the interswath regions.

Another previously-proposed solution was to print in two-pass mode throughout, but this produced essentially a doubling of printing time, which was not generally acceptable.

The present invention seeks to overcome or reduce one or more of the above-mentioned problems.

According to a first aspect of the present invention there is an inkjet printing apparatus having a printhead comprising a plurality of nozzles arranged along a printhead axis, the printing apparatus being arranged to print swaths which overlap edge regions of the neighbouring swaths by a fraction of the swath width, characterised in that the combined printing density of the overlapping regions exceeds that of the non-overlapping regions and the individual printing density of only one region (80) of the overlapping regions has a reduced printing density relative to the density of a non-overlapping region.

Accordingly, this apparatus having only one edge region with a reduced print density may increase the throughput of the printhead.

Preferably, the edge regions of each swath which overlap the neighbouring swaths have a reduced print density relative to their central regions said overlapping fraction at each edge characterised by lying in the range between one sixteenth and one quarter of the swath width.

Advantageously, this accurate selection of the overlapping region helps the apparatus improving the image quality of the printed image, by balancing the need of having a big overlapping region, which can make more pleasant to the eye the transition between the portion of the image printed in a one pass and the portion printed in a two pass, and a small overlapping region, which increase the throughput of the printhead.

According to a third aspect of the present invention, there is provided a method of operating an inkjet printing apparatus having a printhead (30) comprising a plurality of nozzles arranged substantially along a printhead axis comprising the steps of printing swaths which overlap the neighbouring swaths by a fraction of the swath width, so that the combined density of the overlapping regions exceeds that of non-overlapping regions, and printing only one edge region of each swath which overlaps the neighbouring swaths at a reduced print density relative to the printing density of its remaining regions.

Preferred embodiments of the present invention will now be described, by way of example only, with reference to the accompanying drawings, of which:
Fig. 1 is a graph showing a typical profile of angle of inkdrop ejection against nozzle position;
Fig. 2 is a schematic diagram of an inkjet printhead to assist in the explanation of Fig. 1;
Figs. 3a and 3b illustrate the effects of positive and negative swath height error in prior art printing devices;
Fig. 4 shows a schematic diagram of an arrangement in accordance with a first embodiment of the present invention;
Fig. 5 illustrates a problem which can still occur with an arrangement in accordance with Fig. 4;
Fig. 6 illustrates a separate problem which can still occur with an arrangement in accordance with Fig. 4;

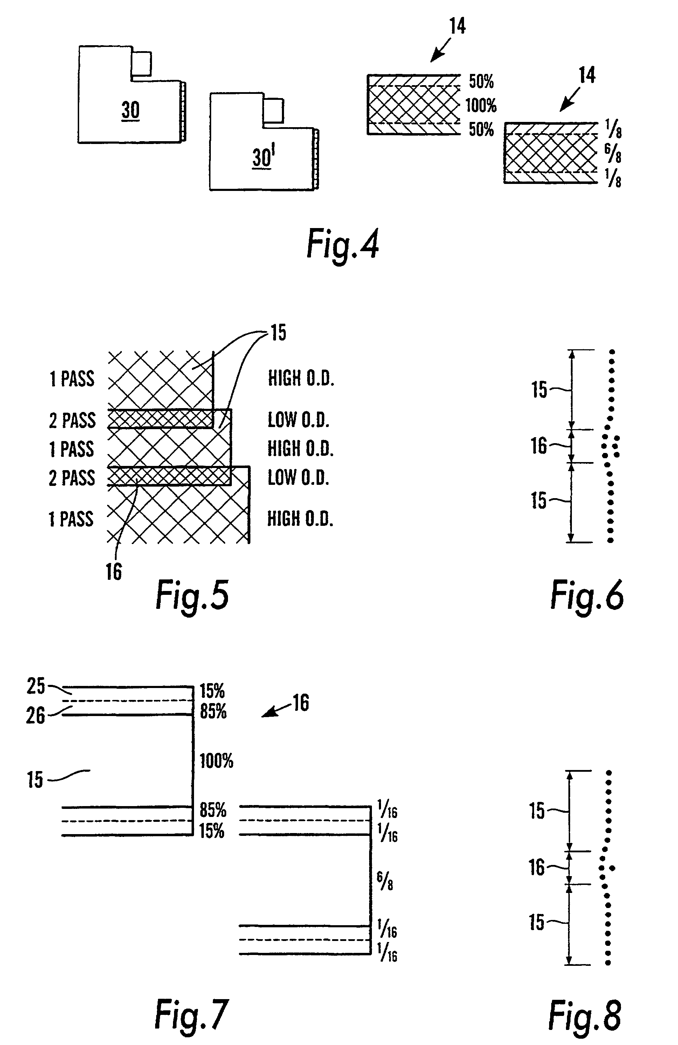

Fig. 4 shows a schematic diagram of an arrangement in accordance with a first embodiment of the present invention;
Fig. 5 illustrates a problem which can still occur with an arrangement in accordance with Fig. 4;
Fig. 6 illustrates a separate problem which can still occur with an arrangement in accordance with Fig. 4;
Fig. 7 illustrates a schematic diagram similar to Fig. 4 but of an arrangement in accordance with a second embodiment of the present invention;
Fig. 8 is a diagram corresponding to Fig. 6, but illustrating the output of an arrangement in accordance with Fig. 7; and

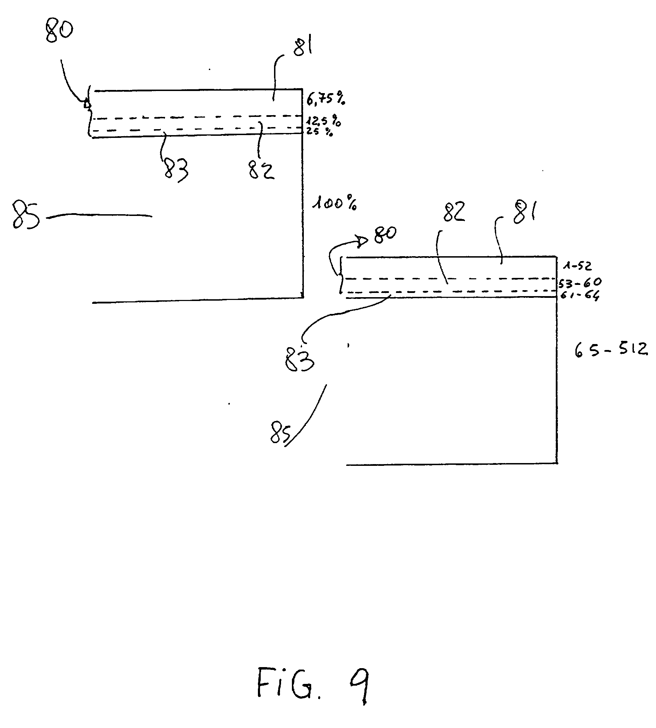

Fig. 9 illustrates a schematic diagram similar to Fig. 7 but of an arrangement in accordance with a third embodiment of the present invention.

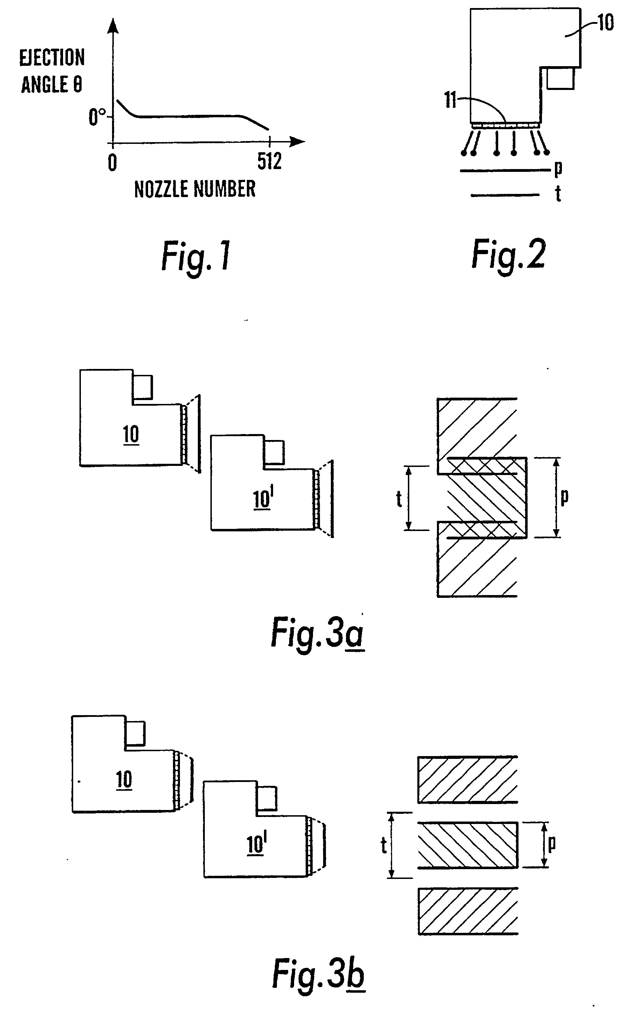

Referring to the drawings, Fig. 1 shows a typical directionality profile of inkjet printheads with nozzles arranged along the pen axis. As shown, the profile is a curve which is generally planar in a central region but variable at the ends. In fact the curve often displays much more localised variations than those shown.

Such profiles produce an effect named Swath Height Error, which will now be explained in connection with Fig. 2. Swath Height Error arises when the height of the printhead (i.e. the dimension along its axis) is not equal to the height of the area actually printed. Fig. 2 shows how a discrepancy arises between the printed swath height "p" and the theoretical swath height "t". The 512 nozzles 11 of printhead 10 are shown as having the profile of Fig. 1 so that the extreme nozzles eject ink in a direction away from the central nozzles, resulting in "p" being greater than "t".

When printing in one pass, the advance of the medium is equal to the theoretical swath height, producing overlapping of printed areas (positive SHE, see Fig. 3a) or white streaks (negative SHE, see Fig. 3b). Figures 3a and 3b show the printed output of a printhead in adjacent positions 10, 10' with Fig. 3b illustrating the result of the extreme nozzles directing ink in a direction towards the central nozzles, resulting in "p" being less than "t".

It is not practical to adjust the height of the printed swath, i.e. the unit of printing medium advance, to cater for those defects. Furthermore, the above-mentioned previous proposals have the disadvantage of substantially reducing throughput.

Figure 4 illustrates an arrangement in accordance with a first embodiment of the present invention in which at neighbouring positions 30, 30' the printhead is arranged to print swaths 14 with the outputs of their adjacent extreme nozzles overlapping by one eighth of the swath height. Moreover the so-called print masks of the printheads are arranged so that their overlapping extreme nozzles print with a 50% printing density, i.e. simulating a two-pass printing mode, whereas their central nozzles print at 100% as if there was a purely one-pass printing mode. It will be seen that the central nozzles extend over a height corresponding to six-eighths of the swath height. It will also be noted that the advance of the print medium is slightly reduced to seven-eighths of that of the described prior art arrangement.

The above-described arrangement has numerous advantages. For example, by interlacing the passes of the printheads, errors produced by misdirection of ink drops are no longer visible. It still has a relatively fast print mode; the corresponding advance of an arrangement in which, say, the end eighths were completely unused, would be six-eighths, and that of a completely two-pass arrangement would be only four-eighths. The end nozzles of the above-described arrangement are still in continuous use so that contaminants do not move towards the central nozzles.

Various modifications can be made to the above-described arrangement. For example, the numbers given may be changed to suit the particular application. Thus the printhead 30 may have any number of nozzles different from 512. Also the fraction of the overlapping nozzles may vary from just above 0 to approaching one half, with the preferred range lying between one sixteenth and one quarter.

Moreover, steps may be taken to hide any errors produced by contaminants in the extreme nozzles. For example, if it is established that the nth nozzle from the bottom of printhead 30 is blocked, then compensation can be arranged in that the nth nozzle upwards from the top of the central region of the printhead prints at 100% print density.

A second embodiment of the present invention is based on the recognition that problems may arise in the operation of the embodiment of Fig. 4. It should be noted that there is commonly a difference in optical density between a zone printed in one-pass mode and a zone printed in two-pass mode, even with the same amount of ink on the paper. This is due to ink interacting differently with the print medium when the second ink application occurs when the other ink has dried. The banding effect produced is illustrated in Fig. 5 which shows central regions 15 forming areas with a high optical density and the overlapping extreme regions 16 forming zones with a low optical density.

Another problem that may occur is caused by the nozzles at the bottom of the printhead (which produce the first printing in an extreme region) being misaligned with the nozzles at the top of the printhead (which produce the second printing in the extreme region). Such misalignment is more likely to occur in such cases than between adjacent groups of nozzles. Because substantially equal amounts of ink are supplied by each extreme nozzle group, the effects of any slight misalignment become noticeable in extreme regions 16, as shown schematically in Figure 6.

Figure 7 illustrates an arrangement in accordance with the second embodiment of the present invention in which, for each pass of the extreme regions 16 of the printing mask, there are used non-uniform distributions of ink density. In particular the nozzles of the extreme one sixteenth region 25 of each printhead are printed with only 15 % printing density, with the next one sixteenth region 26 being printed at 85 % printing density.

Such an arrangement succeeds in still hiding errors without causing too much banding. This is because most of the ink is put on the paper on the same pass, this being less noticeable than the optical density difference due to placing ink in two substantially similar passes. The arrangement is particularly advantageous for line drawings, e.g. CAD drawings, but less so for graphics images. Fig. 8 illustrates that the effects of extreme nozzle misalignment are much less noticeable when only 15 % of the dots come from the other pass.

A normal mono mode use of the above arrangements involves only an extra 5 seconds in producing a D size plot (i.e. substantially 47 seconds compared to 42 seconds).

The same modifications may be made to the second embodiment as to the first embodiment. Moreover, the values of the various numbers may be changed. The two density value pairs chosen may vary between 1% and 99 % to 49 % and 51 %, with preferred pairs varying between 5 % and 95 % to 45 % and 55 %. Most preferred pairs are the 15 % and 85 % (as described) and 10 % and 90 %, and other pairs lying therebetween.

Also the two regions 25, 26 do not need to be of the same extent; they could each occupy 10 to 90 % of the combined extreme region.

The edge strip of lower printing density could be located nearer the central nozzles than the adjacent strip of higher printing density, but such an arrangement would be less advantageous since it would place more reliance on nozzles which were more likely to be faulty.

Instead of two edge strips, three or more edge strips of differing print density may be employed.

A third embodiment of the present invention is based on the recognition that problems may still arise in the operation of embodiment of Fig. 7. It should be noted that there is commonly a difference in optical density between a zone printed at 100% printing density in one pass and a zone printed at 100 % printing density in two or more passes, irrespective of the distribution of the drops during the two or more passes. In particular dots made on the second pass are not printed in the position that would be desired for a maximum image quality. Several physical phenomena related to inkjet technology, printer mechanics and media chemistry are involved. Bidirectional errors, scan axis correction errors, paper advance errors and especially media expansion that occurs during the printing of the first pass, all work to ensure that the dot placed on the second pass may be poorly aligned to dots printed on the first pass. This misalignment may produce wide lighter areas in the interswath regions.

Figure 9 illustrates another arrangement in accordance with the third embodiment of the present invention in which, for each pass of the extreme region 80 of the printing mask, there are used non-uniform distributions of ink density.

According to the present example, the bottom 448 nozzles (from nozzle no. 65 to nozzle no. 512) of a 512-nozzles printhead are fired in the current pass whenever there is print data. This means that all of the print data is printed in a single pass with these 448 nozzles, i.e. the nozzles are printing at 100 % printing density using the region 85 of the printing mask. Then the swath advance is only 448 dot rows. Top nozzles 1 to 64 are used to over print the completed swath in order to mask any white space, or lighter areas, leftover from the swath advance.

Since nozzles 1-64 are overprinting an image already entirely formed, these may print at a low printing density, preferably lower than 10 %, e.g. 6.75 %. However the sharp change in the printing density, i.e. from 6.75 % (even if printed over a 100 % printed area) to 100 %, may generate some banding as well. Due to this reason nozzles 1 to 64 has been preferably divided into groups, each group being masked differently to generate a smoother transition of the printing density. Advantageously, as the printing frequency is increased between groups, the number of nozzles contained in each group is correspondingly reduced.

Preferably, nozzles 1 to 64 of top region of the printhead are divided into 3 groups, the first group containing about 85 % (±3 %) of the nozzles in the top region, the second one containing about 10 % (±3 %) of the nozzles, and the third one containing about 5 % (±3 %) of the nozzles. More preferably, in the first group nozzles 1 to 52, masked by a first sub-region 81 of the printing mask, fire at 6.75 % of density. In the second group. nozzles 53 to 60, masked by a second sub-region 82, fire at 12.5 % of density; while in the third group, nozzles 61 to 64, masked by a third sub-region 83, print at 25 % of density. Nozzles 1 to 64 are fired concurrently during the same pass with nozzles from 65 to 512, in accordance with the data to be printed.

Depending on the constraint of the printhead the number of nozzles in the top region can be varied between the total number of nozzles divided by two less 1 9in this example 255) and 10, always maintaining a division into groups to generate a smoother transition between the low printing density of the overprint nozzles and the 100 % printing density of the remaining nozzles. More preferably the top region will contains from 85 to 50 nozzles or less. Clearly, a reduction in the number of nozzles within the top region will cause a corresponding increase of the swath advance or vice versa.

This print mode has been capable to eliminate the wide area banding produced by the interlace printmode while simultaneously reducing the white space banding. However area fills made with this printmode do exhibit a slightly darker area in the overlap region, but this feature has been proven to be more acceptable to the eye than the wide area light regions described above. Moreover this third embodiment as the previous ones, by printing on the same area with both the top and the bottom extreme regions of the printhead, may be advantageously used to hide errors caused by failing, misdirected or weak nozzles located in one of the two extreme regions of the pen.

In a further embodiment of the present invention, the print mode is arranged as to allow to place more than 100 % of the required ink on the overlap region in two passes, but data dots are printed on each pass as well as extra overprinted dots.

The arrangements according to the present invention are preferably applied to black ink. However, they may additionally or alternatively be used for colour printheads.

It will be noted that the present invention provides a printing apparatus and method in which a partial two-pass print mode hides end nozzle defects whilst being almost as fast as a single-pass print mode.

## Claims

1. An inkjet printing apparatus having a printhead (30) comprising a plurality of nozzles arranged along a printhead axis, the printing apparatus being arranged to print swaths which overlap edge regions of the neighbouring swaths by a fraction of the swath width, **characterised in that** the combined printing density of the overlapping regions exceeds that of the non-overlapping regions and the individual printing density of only one region (80) of the overlapping regions has a reduced printing density relative to the density of a non-overlapping region

2. A printing apparatus according to claim 1 , wherein the overlapping region lies in the range between one sixteenth and one quarter of the swath width.

3. A printing apparatus according to any preceding claims , wherein the overlapping region is substantially one eighth of the swath width.

4. A printing apparatus according to any preceding claims, wherein the overlapping region (80) is printed at a reduced print density to overprint a region (85) already printed in a previous swath at 100% print density.

5. A printing apparatus according to Claim 4, wherein the reduced printing density lays in the range from 5 % to 30 %.

6. A printing apparatus according to any preceding claims , wherein the edge region (85) or regions (15) are each divided into at least two sub-regions (25, 26, 81, 82, 83) of differing print densities.

7. A printing apparatus according to claim 6, wherein the printing density in the edge sub-region (25, 81) is in the range 5 to 15%.

8. A printing apparatus according to claim 7 wherein the printing density in the two consecutively adjacent sub-regions is in the range of 10 to 20% and 20 to 30%.

9. A printing apparatus according to any preceding claims wherein the edge region (80, 15) is divided into at least two sub-regions (81, 82, 83) of differing print densities, the sub-regions printing at a lower print density receiving ink from an higher number of nozzles.

10. A printing apparatus according to any claims 6 or 7 or 8, wherein the edge sub-region (81) is wider than the remaining sub-regions (82, 83).

11. A printing apparatus according to any preceding claim, wherein it prints in black ink.

12. A printing apparatus according to any preceding claim, having an at least one failing nozzle in an edge region (15) thereof, wherein the printing density of a corresponding nozzle in the other edge region (15), which prints along the same path in the adjacent scan, is arranged to print for compensating the at least one failing nozzle.

13. A printing apparatus according to any preceding claims , wherein the sum of the printing density in two adjacent edge regions, which are printed along the same path in two adjacent scans, is more than 100%.

14. A method of operating an inkjet printing apparatus having a printhead (30) comprising a plurality of nozzles arranged substantially along a printhead axis comprising the steps of
printing swaths which overlap an edge region of neighbouring swaths by a fraction of the swath width, so that the combined density of the overlapping regions exceeds that of non-overlapping regions and
printing only one edge region of each swath which overlaps the neighbouring swaths at a reduced print density relative to the printing density of its remaining regions.

## Patentansprüche

1. Eine Tintenstrahldruckvorrichtung, die einen Druckkopf (30) aufweist, der eine Mehrzahl von Düsen aufweist, die entlang einer Druckkopfachse angeordnet sind, wobei die Druckvorrichtung angeordnet ist, um Bänder zu drucken, die Kantenregionen der benachbarten Bänder um einen Bruchteil der Bandbreite überlappen, **dadurch gekennzeichnet, dass** die kombinierte Druckdichte der überlappenden Regionen die der nichtüberlappenden Regionen überschreitet, und dass die individuelle Druckdichte von nur einer Region (80) der überlappenden Regionen eine reduzierte Druckdichte relativ zu der Dichte einer nichtüberlappenden Region aufweist.

2. Eine Druckvorrichtung gemäß Anspruch 1, bei der die überlappende Region in dem Bereich zwischen einem Sechzehntel und einem Viertel der Bandbreite liegt.

3. Eine Druckvorrichtung gemäß einem der vorhergehenden Ansprüche, bei der die überlappende Region im wesentlichen ein Achtel der Bandbreite ist.

4. Eine Druckvorrichtung gemäß einem der vorhergehenden Ansprüche, bei der die überlappende Region (80) bei einer reduzierten Druckdichte gedruckt wird, um eine Region (85) zu überdrucken, die bereits bei einem vorangehenden Band bei 100 % Druckdichte gedruckt wurde.

5. Eine Druckvorrichtung gemäß Anspruch 4, bei der die reduzierte Druckdichte im Bereich von 5 % bis 30 % liegt.

6. Eine Druckvorrichtung gemäß einem der vorhergehenden Ansprüche, bei der die Kantenregion (85) oder die Regionen (15) jeweils in zumindest zwei Teilregionen (25, 26, 81, 82, 83) mit unterschiedlichen Druckdichten unterteilt sind.

7. Eine Druckvorrichtung gemäß Anspruch 6, bei der die Druckdichte in der Kantenteilregion (25, 81) im Bereich von 5 bis 15 % liegt.

8. Eine Druckvorrichtung gemäß Anspruch 7, bei der die Druckdichte in den zwei nacheinander benachbarten Teilregionen im Bereich von 10 bis 20 % und von 20 bis 30 % liegt.

9. Eine Druckvorrichtung gemäß einem der vorhergehenden Ansprüche, bei der die Kantenregion (80, 15) in zumindest zwei Teilregionen (81, 82, 83) mit unterschiedlichen Druckdichten unterteilt ist, wobei die Teilregionen bei einer geringeren Druckdichte drucken und Tinten von einer größeren Anzahl von Düsen empfangen.

10. Eine Druckvorrichtung gemäß einem der Ansprüche 6 oder 7 oder 8, bei der die Kantenteilregion (81) breiter ist als die verbleibenden Teilregionen (82, 83).

11. Eine Druckvorrichtung gemäß einem der vorhergehenden Ansprüche, wobei dieselbe in schwarzer Tinte druckt.

12. Eine Druckvorrichtung gemäß einem der vorhergehenden Ansprüche, die zumindest eine fehlerhafte Düse in einer Kantenregion (15) derselben aufweist, wobei die Druckdichte einer entsprechenden Düse in der anderen Kantenregion (15), die entlang desselben Wegs bei dem benachbarten Durchlauf druckt, zum Drucken zum Kompensieren der zumindest einen fehlerhaften Düse angeordnet ist.

13. Eine Druckvorrichtung gemäß einem der vorhergehenden Ansprüche, bei der die Summe der Druckdichte in zwei benachbarten Kantenregionen, die entlang desselben Wegs in zwei benachbarten Durchläufen gedruckt werden, mehr als 100 % beträgt.

14. Ein Verfahren zum Betreiben einer Tintenstrahldruckvorrichtung, die einen Druckkopf (30) aufweist, der eine Mehrzahl von Düsen aufweist, die im wesentlichen entlang einer Druckkopfachse angeordnet sind, das folgende Schritte aufweist:
Drucken von Bändern, die eine Kantenregion von benachbarten Bändern um einen Bruchteil der Bandbreite überlappen, so dass die kombinierte Dichte der überlappenden Regionen die der nichtüberlappenden Regionen überschreitet; und
Drucken von nur einer Kantenregion jedes Bandes, die die benachbarten Bänder überlappt, bei einer reduzierten Druckdichte relativ zu der Druckdichte seiner verbleibenden Regionen.

## Revendications

1. Un appareil d'impression à jets d'encre qui inclut une tête d'impression (30) comprenant une série de buses agencées le long d'un axe de la tête d'impression, l'appareil d'impression étant agencé pour imprimer des rangées qui recouvrent, d'une fraction de la largeur de rangée, des régions de bords des rangées voisines, **caractérisé en ce que** la densité combinée d'impression des régions de recouvrement dépasse celle des régions sans recouvrement et que la densité individuelle d'impression d'une seule rangée (80) des régions de recouvrement est réduite par rapport à la densité d'une région sans recouvrement.

2. Un appareil d'impression selon la revendication 1, dans lequel la région de recouvrement est dans une plage comprise entre un seizième et un quart de la largeur d'une rangée.

3. Un appareil d'impression selon l'une quelconque des revendications précédentes, dans lequel la région de recouvrement est sensiblement un huitième de la largeur d'une rangée.

4. Un appareil d'impression selon l'une quelconque des revendications précédentes, dans lequel la région de recouvrement (80) est imprimée à une densité d'impression réduite pour effectuer une surimpression sur une région (85) déjà imprimée dans une rangée précédente à une densité d'impression de 100%.

5. Un appareil d'impression selon la revendication 4 dans lequel la densité d'impression réduite est dans une plage de 5% à 30%.

6. Un appareil d'impression selon l'une quelconque des revendications précédentes, dans lequel la région (85) ou les régions (15) de bords sont divisées chacune en au moins deux sous-régions (25, 26, 81, 82, 83), à densités d'impression différentes.

7. Un appareil d'impression selon la revendication 6, dans lequel la densité d'impression dans la sous-région de bord (25, 81) est dans la plage de 5 à 15%.

8. Un appareil d'impression selon la revendication 7 dans lequel la densité d'impression dans les deux sous-régions consécutivement adjacentes est dans la plage de 10 à 20% et de 20 à 30%.

9. Un appareil d'impression selon l'une quelconque des revendications précédentes dans lequel la région de bord (80, 15) est divisée en au moins deux sous-régions (81, 82, 83) à densités d'impression différentes, les sous-régions qui sont imprimées à une densité d'impression moindre recevant de l'encre provenant d'un nombre plus élevé de buses.

10. Un appareil d'impression selon l'une quelconque des revendications 6 ou 7 ou 8, dans lequel la sous-région de bord (81) est plus large que les sous-régions restantes (82, 83).

11. Un appareil d'impression selon l'une quelconque des revendications précédentes, qui imprime à l'encre noire.

12. Un appareil d'impression selon l'une quelconque des revendications précédentes, qui inclut au moins une buse défaillante dans une de ses régions de bords (15), dans lequel la densité d'impression d'une buse correspondante dans l'autre région de bord (15), qui imprime le long du même trajet dans le balayage adjacent, est agencée pour imprimer de manière à compenser la buse défaillante unique au moins.

13. Un appareil d'impression selon l'une quelconque des revendications précédentes, dans lequel la somme des densités d'impression dans deux régions de bord adjacentes, qui sont imprimées le long du même trajet dans deux balayages adjacents, est supérieure à 100%.

14. Un procédé de mise en oeuvre d'un appareil d'impression qui inclut une tête d'impression (30) comprenant une série de buses agencées sensiblement le long d'un axe de la tête d'impression, qui comprend les étapes consistant à:
imprimer des rangées qui recouvrent, d'une fraction de la largeur d'une rangée, une région de bord de rangées voisines, d'une manière telle que la densité combinée des régions de recouvrement dépasse celle des régions sans recouvrement et
n'imprimer qu'une région de bord de chaque rangée qui recouvre les rangées voisines à une densité d'impression réduite par rapport à la densité d'impression de ses régions restantes.
